# EUROPEAN PATENT SPECIFICATION

(11) **EP 2 477 421 B1**
(45) Date of publication and mention of the grant of the patent: **13.06.2018**
(21) Application number: 12150208.2
(22) Date of filing: 04.01.2012
(51) Int. Cl.: H04W 36/02, H04W 64/00, H04W 84/00, H04W 4/02

(54) **METHOD AND APPARATUS FOR PACKET DISTRIBUTION IN A VEHICULAR NETWORK ENVIRONMENT**
VERFAHREN UND GERÄT ZUR PAKETVERTEILUNG IN EINER FAHRZEUGNETZWERKUMGEBUNG
PROCÉDÉ ET APPAREIL DE DISTRIBUTION EN PAQUET DANS UN ENVIRONNEMENT DE RÉSEAU VÉHICULAIRE

(30) Priority: 14.01.2011 US 201161433138 P; 05.05.2011 US 201113101801
(43) Date of publication of application: 18.07.2012
(73) Proprietor: Cisco Technology, Inc., San Jose, CA 95134-1706 (US)
(72) Inventor: Subramanian, Vijaynarayanan, Sunnyvale, CA California 94089 (US); Addepalli, Sateesh K., San Jose, CA California 95128 (US); Dai, Lillian Lei, Rockville, MD Maryland 20850 (US)
(74) Representative: Kazi, Ilya

(56) References cited:
- EP-A1- 1 737 160
- US-A1- 2004 143 386
- US-A1- 2006 089 157
- US-A1- 2007 129 072
- US-A1- 2010 085 868

## Description

### TECHNICAL FIELD

This specification relates in general to the field of communications, and more particularly, to a system and method for packet distribution in a vehicular network environment.

### BACKGROUND

Networking architectures have grown increasingly complex and have been designed for use in a wide variety of communications environments. Demand continues to rise among the subscriber base of end users for network access across diverse network environments. In particular, configuring suitable network architecture for vehicular environments (e.g., automobiles, airplanes, trains, boats, etc.) presents unique difficulties. For example, the high variability and availability of wireless links due to vehicle mobility can adversely affect quality of service in a vehicular environment. Thus, providing a comprehensive architecture that can provide a quality user experience by mitigating temporary network disconnections continues to present significant challenges to system designers, automobile manufacturers, service providers, and the like. US 2004/0143386 discloses a method in which a path extending from a present location of a mobile terminal to a destination via a base station is calculated, distances between base stations on the calculated path and the present location are calculated, and the closest base station is determined as a contents delivery base station. Grace time for the mobile terminal to pass through the contents delivery base station is calculated. Then, scheduled time to deliver the contents to the mobile terminal is calculated. While monitoring a travel state of the mobile terminal, the contents are delivered to the mobile terminal near the contents delivery base station. EP 1737160 discloses a method by which a wireless communication system for providing a service, e.g. video streaming, for a mobile terminal by receiving the geographical position of a point of the travel route, predicting which of its access points have a coverage area which might be reached by the mobile terminal and providing the service at this access point prior to the arrival of the mobile terminal. US 2006/0089157 discloses a method for providing mobile users with requested resources. First and second location indicators for the mobile user are received, with each of the location indicators having a time associated therewith. A mobile vector of the mobile user is then calculated using the first and second location indicators, and the mobile vector is associated with a first network region and a second network region. A first portion of the requested resource is sent to a first storage device in the first network region, and a second portion of the requested resource is sent to a second storage device in the second network region. The first and second resource portions are sent to the user when the user is in the first and second network regions, respectively.

US 2007/129072 discloses a method wherein a vehicle OBU or mobile phone in a car requests data from a controller and provides GPS and speed information. The controller generates a predicted route and identifies a number of base stations along the predicted route. The controller determines how much data can be transmitted from each base station such that data is transmitted from the base station when the car is within service range of the base station wherein the data can be transmitted redundantly from the base station or retransmitted from the current base station or from the next base station along the predicted route in case of transmission failure. US 2010/085868 discloses a method to implement error resiliency e.g. packet redundancy based on the relative importance of the data. For example, video packets corresponding to I-frames are redundantly transmitted to increase the reliability of transmission. Equally, packets for the I-frames can be enhanced with error correcting schemes so that corrupt packets can be recovered. Both schemes can be used together.

### SUMMARY OF THE INVENTION

Aspects and examples of the invention are set out in the appended claims.

### BRIEF DESCRIPTION OF THE DRAWINGS

To provide a more complete understanding of the present disclosure and features and advantages thereof, reference is made to the following description, taken in conjunction with the accompanying figures, wherein like reference numerals represent like parts, in which:
FIGURE 1 is a simplified block diagram illustrating an example embodiment of a network environment in accordance with this specification;
FIGURE 2 is a simplified block diagram illustrating additional details that may be associated with a connected vehicle in the example embodiment of the network environment;
FIGURE 3 is a simplified block diagram illustrating additional details that may be associated with one potential embodiment of the network environment;
FIGURE 4 is a simplified flowchart illustrating example operations that may be associated with packet distribution in one embodiment of the network environment; and
FIGURE 5 is a simplified flowchart illustrating additional example operations that may be associated with packet distribution in one embodiment of the network environment.

### DETAILED DESCRIPTION OF EXAMPLE EMBODIMENTS

### OVERVIEW

A method is provided in one example embodiment that includes receiving a request for data from a source device, such as an on-board unit of vehicle or a mobile device coupled to an on-board unit, over a network. Location data, such as GPS coordinates, speed, and heading associated with the source device may also be received. A travel path for the source device can be predicted based on the location data, and an access point to the network can be located within range of the travel path. Packets associated with the requested data may be sent to the access point and then forwarded to the source device when the source device is in range.

In more particular embodiments, packets may be divided and sent to different access points within the range of the travel path. Additionally or alternatively, data may be encoded in the packets, some of which may be redundant, using forward error correction or network coding, for example.

### EXAMPLE EMBODIMENTS

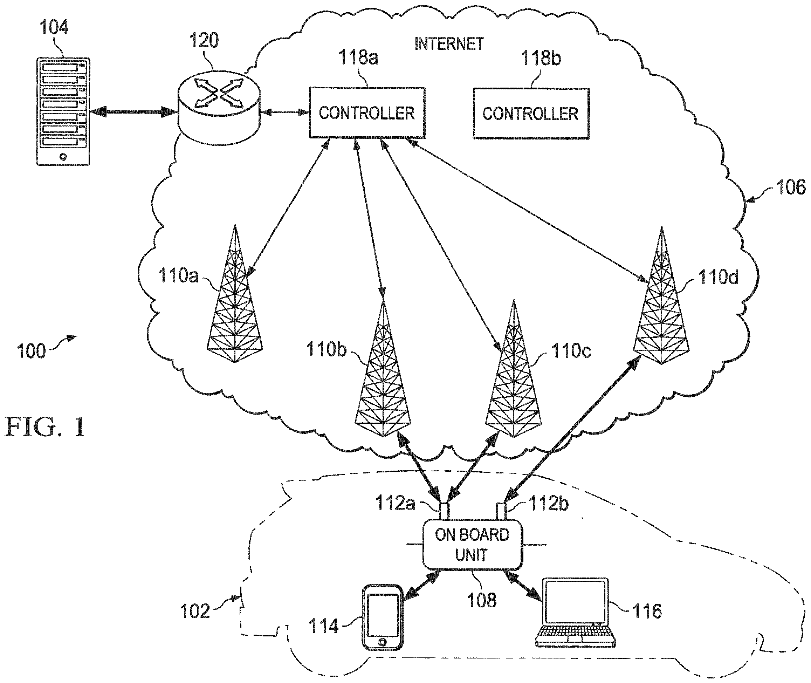

Turning to FIGURE 1, FIGURE 1 is a simplified block diagram of an example embodiment of a network environment 100 in accordance with this specification. The example embodiment of FIGURE 1 includes a connected vehicle 102 in communication with a remote node 104 through a communication network, such as Internet cloud 106. In general, connected vehicle 102 may include an on-board unit (OBU) 108 that can establish and manage communications over any viable pathway through one or more wireless interfaces 112a-b. Roadside access points (also referred to herein simply as 'access points') 110a-d are representative of any roadside communication infrastructure, which may include access points, base stations, or gateways in 3G/4G networks, Femto/Micro/Pico networks, satellite networks, WiMAX networks, WiFi networks, WiFi dedicated short range communication (DSRC), or ad hoc DSRC, for example. Controllers 118a-b may be coupled to remote node 104 *(e.g.,* via router 120) and access points 110a-d to manage packet distribution associated with communications between OBU 108 and remote node 104. OBU 108 may also be in communication with various mobile devices, such as in-vehicle mobile devices 114 and 116.

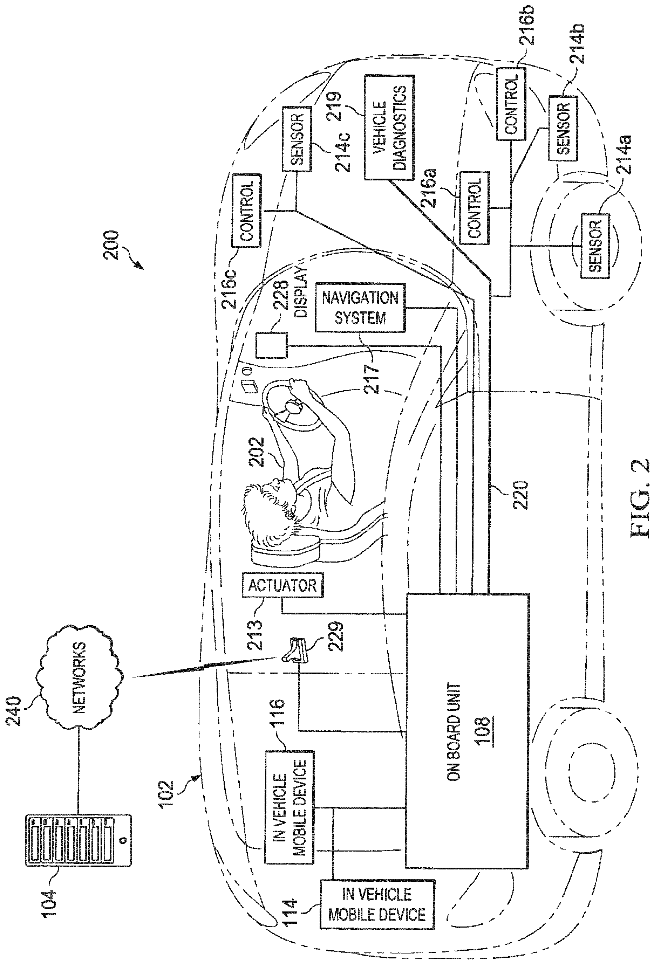

FIGURE 2 is a simplified block diagram illustrating additional details that may be associated with connected vehicle 102 in the example embodiment of FIGURE 1. FIGURE 2 includes a communication system 200 to enable communication between OBU 108 and other nodes, such as remote node 104 and in-vehicle mobile devices 114-116. The example architecture of FIGURE 2 also includes an end user (driver) 202 operating a vehicle 102.

OBU 108 may also be suitably coupled to various mobile devices at any given time, where such devices may be associated with particular end users (passengers or driver) within vehicle 102. Mobile devices, such as in-vehicle mobile devices 114 and 116, are inclusive of mobile phones, smart mobile phones (smartphones), e-book readers, tablets, iPads, personal digital assistants (PDAs), laptops or electronic notebooks, portable navigation systems, multimedia gadgets (e.g., cameras, players, etc.), and any other device, component, element, or object capable of initiating voice, audio, video, media, or data exchanges within communication system 200. Data, as used herein, refers to any type of numeric, voice, video, or script data, or any type of source or object code, or any other suitable information in any appropriate format that may be communicated from one point to another in electronic devices and/or networks.

FIGURE 2 also includes a network 240, representing various types of connectivity, such as Internet cloud 106, to vehicle 102 *(e.g.,* via antenna 229). Each established network 240 has a logical coupling to nodes, such as remote node 104, or other external electronic devices. A 'node' may be any device (e.g., a machine device or a mobile device), client, server, peer, service, application, or other object capable of sending, receiving, or forwarding information over a communications channel in a network. A 'remote node,' such as remote node 104, may be any node located externally to a vehicle connected to a vehicular network environment, such as vehicle 102.

Elements of FIGURE 1 and FIGURE 2 may be coupled to one another through one or more interfaces employing any suitable connection (wired or wireless), which provides a viable pathway for electronic communications. Additionally, any one or more of these elements may be combined or removed from the architecture based on particular configuration needs. Communication system 200 may include a configuration capable of transmission control protocol/Internet protocol (TCP/IP) communications for the electronic transmission or reception of packets in a network. Communication system 200 may also operate in conjunction with a user datagram protocol/IP (UDP/IP) or any other suitable protocol, where appropriate and based on particular needs. In addition, communication system 200 may also include a configuration capable of accommodating legacy bus subsystems that may be employed to convey information across the myriad of machine devices (e.g., actuator 213, sensors 214a-c, controls 216a-c) in vehicle 102.

For purposes of illustrating the operational aspects of communication system 200, it is important to first understand the activities and problems that may be present in electronic communication scenarios in a vehicular environment such as the one shown in FIGURE 1 and FIGURE 2. The following foundational information may be viewed as a basis from which the present disclosure may be properly explained. Such information is offered earnestly for purposes of explanation only and, accordingly, should not be construed in any way to limit the broad scope of the present disclosure and its potential applications.

Many modern vehicles include some degree of internal data processing capability and network communication. Originally, vehicle networks were confined by the boundaries of the vehicle itself, but with the advent of global positioning systems (GPS) and satellite radio, external communication is becoming more commonplace as well. More complex vehicular communication systems continue to emerge as a type of network having many disparate nodes, such as vehicles, roadside stations, mobile wireless devices, and traffic control devices.

Vehicles with OBUs in a vehicular network environment may communicate with remote nodes (e.g., servers), particularly via the Internet. An OBU may have multiple wireless interfaces such as WiFi, 3G, or 4G for communicating with roadside infrastructure access points. However, vehicles may move at high speeds that can drastically limit the contact time between a particular access point and the vehicle. Thus, handovers can be much more frequent in a vehicular network environment than in other environments, which can cause temporary loss of network connectivity, increased download times, and reduced quality of service.

In accordance with one embodiment, network environment 100 can overcome these shortcomings (and others) by a providing a system and method for distributed content caching to improve quality of service and mitigate temporary network disconnections. More particularly, in some embodiments an OBU may be able to associate with multiple access points through multiple real or virtual wireless interfaces. Forward error correction (FEC), network coding, and/or channel coding may be used to produce redundancy for better loss resilience. Certain embodiments may also provide packet spraying (replicated or coded) to multiple access points to be forwarded to an OBU and vice versa. To provide disruption tolerance, access points may store packets until an OBU comes in range, at which time the packets can be forwarded to the OBU.

Each of these mechanisms may be adapted to account for the speed and direction of travel of a vehicle to intelligently fetch data from a remote node and transmit it to an access point along the path of the vehicle. Thus, a file, a section of a file, or coded packet streams may be appropriately pre-cached at multiple access points along a vehicle's path, for example, which can minimize the data transfer time for a mobile client as it moves between access points, particularly for popular location-based content.

A vehicle's path may be predicted based on GPS tracking or other location service. For example, the path of a vehicle is typically predictable to some extent given a map, the vehicle's GPS coordinates over time, speed, heading, and possibly a destination address. The predicted path, along with known access point coordinates, can be leveraged to estimate which access points may be encountered by the vehicle and to target those access points along the predicted path for packet reception. Depending on an application's quality of service requirements and the wireless environment, a controller may send multiple copies of packets to multiple access points so that the packets can be delivered when the vehicle is within wireless coverage range of the access points. This technique can significantly reduce packet loss and retransmissions during access point handoff events. Alternatively or additionally, data or sections of data may be intelligently pre-cached at different access points - taking into account the movement, speed, and direction of travel - and transmitted to an OBU as a vehicle passes. Accordingly, instead of spraying packets to nearby access points in a proximity group of access points, packets may be intelligently sprayed to access points that the vehicle is likely to encounter.

In yet other particular embodiments, data may be encoded to produce a set of packets, some of which may be redundant. If a relevant subset of the encoded stream reaches a vehicle, the original data stream can be recovered after decoding the received packets. This technique can provide mitigation against packet losses that may be common at high speeds. An OBU may also be able to connect to multiple access points simultaneously, using either multiple physical interfaces or virtual interfaces. Packets can be duplicated or encoded using network coding or channel coding and these coded packets can be sent on different physical or virtual wireless interfaces (e.g., WiFi, 3G, etc.) to and from an OBU, thus providing multi-path transmission for additional loss resilience. Such multi-path capability can be a powerful feature as these wireless domains can be managed by completely different service providers.

To illustrate further, consider one example scenario in which a server is transmitting a file over the Internet to an OBU in a vehicle. As the vehicle travels from point A to point B, it might be in the vicinity of multiple access points and may be associated with multiple access points at different times. The infrastructure (including access points and controllers) can use the current location of the vehicle (e.g., as provided by GPS) and may be able to predict the path of the vehicle. A controller, for instance, can route future packets to access points further along the path to be cached so that the OBU can receive the packets as it passes by those access points. Potentially, the packets could be sent to more than one access point for redundancy so that the OBU can receive them from whichever access point provides a better connection. Also, coding mechanisms such as network coding or channel coding can be used where the data is enhanced with redundant packets using FEC. Then, the OBU can receive a subset of the encoded stream and can decode the data stream and get the original packets.

The OBU can also be equipped with multiple real or virtual interfaces, in which case different interfaces can be connected to different access points. Thus, in certain embodiments a controller can send different packets belonging to a stream over different access points, thereby providing multi-path diversity and higher resilience against losses. The current and future location of the OBU can be used to deliver or spray packets to different access points, and the OBU can combine the packets received on different access points to get the data stream.

Thus, network environment can route packets to the closest or best access point. The use of multiple access point association, network coding, spraying, caching, replicated delivery, prediction and location tracking can enable data delivery and routing in a highly dynamic and mobile environment where the topology is constantly changing. Similarly, an OBU can use the techniques on the reverse path from the vehicle to the Internet. Knowing the locations of the access points and its own location, an OBU can selectively route packets to different access points.

Turning to the infrastructure of FIGURE 2, end user 202 can be associated with a person (e.g., a driver or passenger) having any type of relationship to the vehicle such as an owner, a renter, a temporary driver, a family member or friend of the owner, etc. End user 202 may initiate communication in communication system 200 via some network, and such communication may be initiated through any suitable node, inclusive of an in-vehicle mobile device 114 or 116, display 228, and navigation system 217. In one embodiment, additional displays may be provided for one or more passengers in vehicle 102.

In-vehicle mobile devices 114 and 116, and mobile devices external to vehicle 102, may communicate with OBU 108 of communication system 200 through any wired or wireless communication link and may be configured as a personal area network (PAN) or a wireless personal area network (WPAN) or any other appropriate architecture or system that facilitates communications in a network environment. Wired and wireless communication links may be inclusive of any electronic link such as Bluetooth, near-field communication (NFC), wireless technologies (e.g., IEEE 802.11x), a USB cable, an HDMI cable, etc. Connection between mobile devices and OBU 108 may be configured based on particular needs and logistics. In one particular example, an external mobile device may be connected to OBU 108 through a USB cable or wireless network when, for example, the external mobile device is a diagnostic tool used by a mechanic for servicing vehicle 102.

Network 240 represents nodes of interconnected communication paths for receiving and transmitting packets of information that propagate through communication system 200. Network 240 offers communicative interfaces between any of the components of FIGURE 2 and remote network nodes (e.g., remote node 104), and may be any local area network (LAN), wireless local area network (WLAN), wide area network (WAN), the Internet, wireless wide area network (WWAN), metropolitan area network (MAN), wireless metropolitan area network (WMAN), wireless single hop or multi-hop vehicle-to-vehicle network, virtual private network (VPN), Intranet, Extranet, or any other appropriate architecture or system that facilitates communications in a network environment. Network 240 may include any suitable communication link to OBU 108 such as wireless technologies (e.g., IEEE 802.11x), satellite, cellular technologies (e.g., 3G, 4G, etc.), WiMAX, DSRC, Femto/Micro/Pico base stations, etc., or any combination thereof. Network 240 may also include configurations capable of TCP/IP communications, UDP/IP, or any other suitable protocol, where appropriate and based on particular needs.

In the particular example embodiment of FIGURE 2, vehicle 102 includes capabilities associated with navigation system 217 and vehicle diagnostics 219. Navigation system 217 may be provided in various embodiments including, for example, a portable navigation system or, alternatively, a fixed navigation system, each of which may be configured for wireless or wired communications to OBU 108.

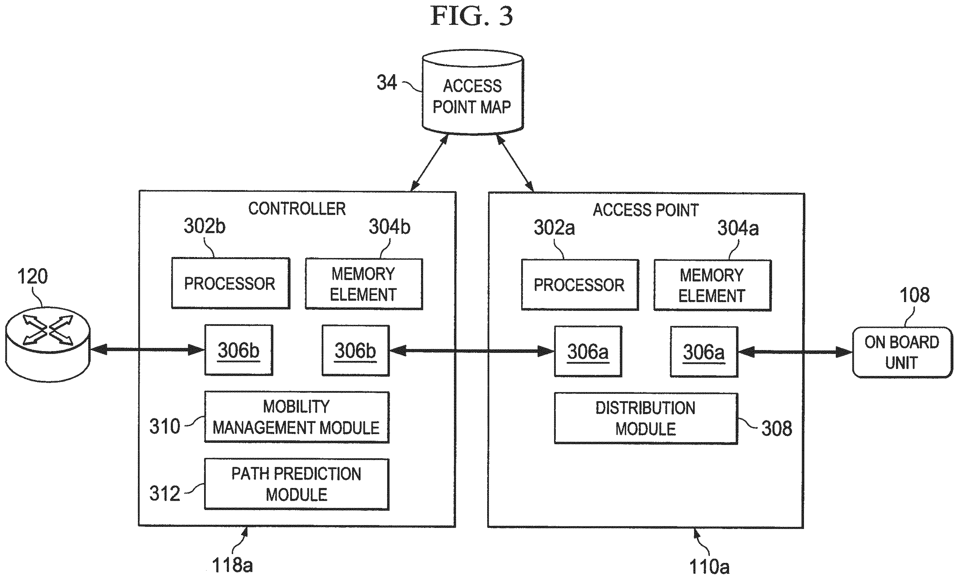

FIGURE 3 is a simplified block diagram illustrating additional details that may be associated with one potential embodiment of network environment 100. As shown, access point 110a and controller 118a can each include a processor element 302a-b, a memory element 304a-b, and network interfaces 306a-b, respectively. Network interfaces 306a-b may include one or more distinct interfaces to facilitate communication via the various networks described herein. Network interfaces 306a-b may be inclusive of multiple wireless interfaces (e.g., WiFi, WiMAX, 3G, 4G, white space, 802.11x, 60 GHz, satellite, Bluetooth, NFC, LTE, GSM/WCDMA/HSPA, CDMA1x/EVDO, DSRC, CAN, GPS, etc.). Other interfaces represented by network interfaces 306a-b may include physical ports (e.g., Ethernet, USB, HDMI, etc.), and the like. Similarly, each of the network elements and user equipment (e.g., mobile devices) of communication system 200 can also include suitable interfaces for receiving, transmitting, and/or otherwise communicating data or information in a network environment. Access point 110a may further include a distribution module 308. Controller 118a may include a mobility management module 310 and a path prediction module 312. To facilitate certain operations of network environment 100, access point 110a and controller 118a may also include or have access to various databases, such as access point map 314. Such databases can be consolidated with memory elements (or vice versa), or the storage can overlap/exist in any other suitable manner.

In one example implementation, remote node 104, access points 110a-d, and controllers 118a-b can be network elements, which are meant to encompass network appliances, servers, routers, switches, gateways, bridges, loadbalancers, firewalls, processors, modules, or any other suitable device, component, element, or object operable to exchange information in a network environment. Moreover, the network elements may include any suitable hardware, software, components, modules, interfaces, or objects that facilitate the operations thereof. This may be inclusive of appropriate algorithms and communication protocols that allow for the effective exchange of data or information.

OBU 108, access points 110a-d and controllers 118a-b can each include one or more memory elements (e.g., memory elements 304a-b) for storing information to be used in achieving operations as outlined herein. OBU 108, access points 110a-d and controllers 118a-b may further keep information in any suitable memory element (e.g., random access memory (RAM), read only memory (ROM), field programmable gate array (FPGA), erasable programmable read only memory (EPROM), electrically erasable programmable ROM (EEPROM), etc.), software, hardware, or in any other suitable component, device, element, or object where appropriate and based on particular needs. The information being tracked, sent, received, or stored in network environment 100 could be provided in any database, register, table, cache, queue, control list, or storage structure, based on particular needs and implementations, all of which could be referenced in any suitable timeframe. Any of the memory or storage items discussed herein should be construed as being encompassed within the broad term 'memory element' as used herein.

In one example implementation, network environment 100 may include software (e.g., distribution module 308, mobility management module 310, path prediction module 312, etc.) to achieve or foster the operations outlined herein. In other embodiments, features may be provided externally to these elements, or included in some other network element to achieve this intended functionality. Alternatively, these elements may include software (or reciprocating software) that can coordinate in order to achieve the operations, as outlined herein. In still other embodiments, one or all of these devices may include any suitable algorithms, hardware, software, components, modules, interfaces, or objects that facilitate the operations thereof.

In example embodiments, the operations outlined herein may be implemented by logic encoded in one or more tangible media, which may be inclusive of non-transitory media (e.g., embedded logic provided in an ASIC, digital signal processor (DSP) instructions, software potentially inclusive of object code and source code to be executed by a processor or other similar machine, etc.). In some of these instances, one or more memory elements (e.g., memory elements 304a-b) can store data used for the operations described herein. This includes the memory elements being able to store software, logic, code, or processor instructions that are executed to carry out the activities described in this specification.

Additionally, OBU 108, access points 110a-d and controllers 118a-b may include processing elements, such as processors 222a-b, that can execute software or algorithms to perform the activities described herein. A processor can execute any type of instructions associated with the data to achieve the operations detailed in this specification. In one example, the processor elements may transform an element or an article (e.g., data) from one state or thing to another state or thing. In another example, the activities outlined herein may be implemented with fixed logic or programmable logic (e.g., software/computer instructions executed by a processor) and the elements identified herein could be some type of a programmable processor, programmable digital logic (e.g., an FPGA, an EPROM, an EEPROM), or an ASIC that includes digital logic, software, code, electronic instructions, flash memory, optical disks, CD-ROMs, DVD ROMs, magnetic or optical cards, other types of machine-readable mediums suitable for storing electronic instructions, or any suitable combination thereof. Any of the potential processing elements, modules, microprocessors, digital signal processors (DSPs), and other devices described in this specification should be construed as being encompassed within the broad term 'processor.'

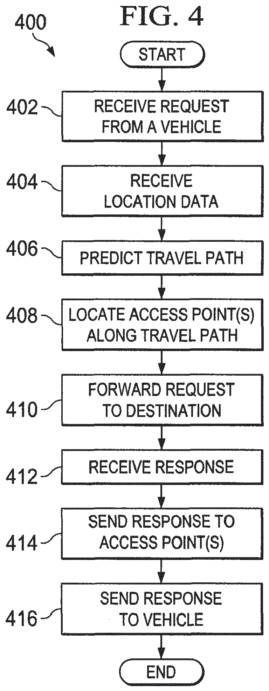

FIGURE 4 is a simplified flowchart 400 illustrating example operations that may be associated with packet distribution in one embodiment of network environment 100. In one particular embodiment, these operations may be carried out by mobility management module 310 and path prediction module 312 in controller 118a.

At 402, a request for data may be received over a network, such as Internet 106, from a vehicle, or more particularly, a source device associated with a vehicle, such as an OBU or mobile device coupled to an OBU, for example. The request may specify a delivery address associated with a destination, such as a domain name or IP address of a web server. Location data associated with the vehicle may also be received with the request, or alternatively through a separate channel or subsequent communication at 404. The location data may include information such as GPS coordinates, speed, direction of travel, etc., and may further include a destination address and routing information in certain embodiments. The location data may be used to predict a travel path for the vehicle at 406. One or more access points may be located along the travel path at 408. For example, travel path data can be compared to map data or a database of access point coordinates (e.g., access point map 314) to locate access points within a configurable distance (which may coincide with the transmitter range of the OBU, for example) of the travel path. Such map data or database may be developed *a priori,* by a service provider having intimate knowledge of the location of every access point in the network, for example, or through crowd sourcing techniques in which the data is reported and collected by OBUs as they encounter the access points. The data request from the vehicle may be forwarded to the destination address at 410, and a response received at 412. Packets associated with the response may be sent to the access point located along the travel path at 414, and the access point may send the response to the vehicle at 416 when the vehicle is in range of the access point (e.g., the vehicle contacts the access point or the access point locates the vehicle).

In more particular embodiments, multiple access points may be located and copies of the packets may be sent to the additional access points, which may reduce packet loss and retransmissions during handoff events as the vehicle moves along the travel path between access points. Data or sections of data may be pre-cached at different access points and transmitted to a vehicle as the vehicle passes. For example, if the speed of the vehicle suggests that the vehicle may not be within range of a single access point for long enough to receive the entire response, the packets may be broken into a first section and a second section of data. The first section may be sent to a first access point closest to the vehicle and the second section may be sent to a second access point further along the travel path. The vehicle may thus retrieve part of the requested data from the first access point and the rest of the data from the second access point.

In yet other embodiments, the data may additionally or alternatively be encoded in the packets, some of which can be redundant. For example, the data may be encoded with FEC or network coding, which can mitigate packet losses that may be common at high vehicle speeds. FEC encoding (also sometimes called "channel coding"), for instance, is a system of error control in which systematically generated redundant data can be added to messages, which can allow a receiver or destination device to detect and correct some errors without the need for retransmission or additional data from the sender or source device. Network coding typically combines several packets and combines them for transmission.

In some embodiments, an OBU may be able to connect to multiple access points simultaneously, using either multiple physical interfaces or virtual interfaces, for example. Consequently, packets can be duplicated or encoded and sent on different paths associated with different wireless interfaces (and possibly managed by different providers) to and from an OBU, which can provide further loss resilience.

Thus, in an embodiment in which such operations may be carried out by a controller, such as controller 118a, all data passes through the controller. Accordingly, and the controller may function as a content proxy, and handle coding and packet duplication without regard to the source of the packets. Moreover, controllers such as controllers 118a-b can be implemented in a distributed manner, providing substantial system scalability.

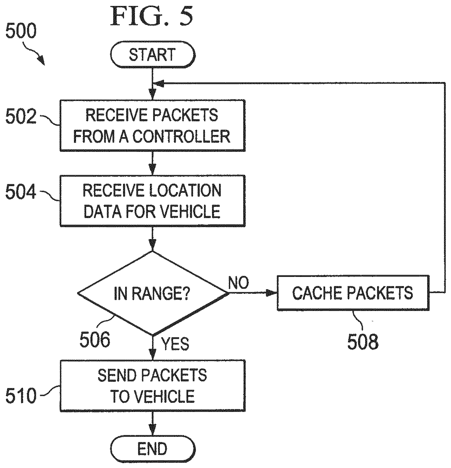

FIGURE 5 is a simplified flowchart 500 illustrating additional example operations that may be associated with packet distribution in one embodiment of network environment 100. In one particular embodiment, these operations may be carried out by distribution module 308 in access point 110a. A distribution request may be received from a controller at 501. In general, a distribution request is a request to provide packet distribution services, such as caching packets for subsequent delivery to a vehicle, and may include parameters such as the storage requirements and an expiration time. A distribution request may be accepted or denied based on a number of criteria, such as storage capacity. If a distribution request is accepted, packets may be received over a network from a controller at 502. In general, the packets may be addressed to a vehicle and contain data responsive to a request from the vehicle, such as a web page requested by the vehicle. Location data associated with the last known position of the vehicle may also be received at 504, which may be used to determine if the vehicle is within receiving range at 506. Alternatively or additionally, it can be determined if contact has been made with an access point to determine if the vehicle is within receiving range. If the vehicle is not within receiving range, the packets can be stored *(i.e.,* cached) at 508 until the vehicle is in receiving range. In some embodiments, the packets may be deleted if the vehicle does not receive the packets before the expiration time specified in a distribution request or other predetermined time period. When the vehicle is within receiving range, the packets may be sent to the vehicle at 510.

Packets can be routed similarly on a reverse path (e.g., from a vehicle to a web server). For example, an OBU can selectively route packets to different access points if the GPS coordinates of the access points are known or accessible to the OBU. Thus, example operations on the reverse path may include predicting a travel path of a vehicle, which may be based upon a navigation system route, GPS coordinates, speed, heading, or destination, for instance. The travel path can be compared to map data or a database of access point coordinates, for example, to locate one or more access points within a configurable distance (such as the transmitter range of an OBU) to the travel path. A request for data can then be sent to different access points based upon the location of access points along the travel path.

Thus, as shown and described herein, network environment 100 can improve communication performance through packet redundancy, spraying, and caching. Moreover, network environment 100 may include a comprehensive controller and OBU architecture that can handle mobility as well as vehicle path prediction, intelligent pre-caching, diversity, replication, and coding for a significantly improved vehicular communication experience. Such an architecture may be applied to multiple wireless interfaces (possibly managed by different service providers), without requiring any changes to the source or destination devices.

Note that with the examples provided above, as well as numerous other examples provided herein, interaction may be described in terms of two, three, or four network elements. However, this has been done for purposes of clarity and example only. In certain cases, it may be easier to describe one or more of the functionalities of a given set of flows by only referencing a limited number of network elements. It should be appreciated that network environment 100 (and its teachings) are readily scalable and can accommodate a large number of components, as well as more complicated/sophisticated arrangements and configurations. Accordingly, the examples provided should not limit the scope or inhibit the broad teachings of network environment 100 as potentially applied to a myriad of other architectures. Additionally, although described with reference to particular scenarios, where a module is provided within the network elements, these modules can be provided externally, or consolidated and/or combined in any suitable fashion. In certain instances, a module may be provided in a single proprietary unit.

It is also important to note that the steps in the appended diagrams illustrate only some of the possible signaling scenarios and patterns that may be executed by, or within, network environment 100. Some of these steps may be deleted or removed where appropriate, or these steps may be modified or changed considerably without departing from the scope of teachings provided herein. In addition, a number of these operations have been described as being executed concurrently with, or in parallel to, one or more additional operations. However, the timing of these operations may be altered considerably. The preceding operational flows have been offered for purposes of example and discussion. Substantial flexibility is provided by network environment 100 in that any suitable arrangements, chronologies, configurations, and timing mechanisms may be provided without departing from the teachings provided herein.

A method is provided in one example embodiment that includes receiving a request for data from a source device, such as an on-board unit of vehicle or a mobile device coupled to an on-board unit, over a vehicular network. Location data, such as GPS coordinates, speed, and heading associated with the source device may also be received. A travel path for the source device can be predicted based on the location data, and an access point to the network can be located within range of the travel path. Packets associated with the requested data may be sent to the access point and then forwarded to the source device when the source device is in range.

## Claims

1. A method, comprising:
receiving (402) a request for data from a source device over a network, the source device comprising multiple different physical or virtual wireless interfaces for connecting to multiple access points simultaneously over different wireless networks;
receiving (404) location data associated with the source device;
predicting (406) a travel path for the source device based on the location data, wherein the location data comprises at least one of GPS coordinates over time, speed, a direction of travel, and destination of the source device;
locating (408) a plurality of access points to the network within range of the predicted travel path; and
sending (414) packets associated with the requested data to the plurality of access points, wherein the packets are sent to multiple ones of the plurality of access points that can communicate with the multiple different physical or virtual wireless interfaces of the source device over different wireless networks;
wherein the requested data is encoded in the packets and the packets include a subset of redundant packets.

2. The method of Claim 1, wherein
the packets comprise a first section and a second section of the requested data the first section of packets is sent to a first access point of the plurality of access points; and
the second section is sent to a second access point of the plurality of access points.

3. The method of any preceding claim, wherein the requested data is encoded in the packets with forward error correction.

4. The method of either claim 1 or claim 2, wherein the requested data is encoded in the packets with network coding.

5. The method of any preceding claim, wherein the source device is an on-board unit of a vehicle.

6. The method of any of claims 1 to 4, wherein the source device is a mobile device coupled to an on-board unit of a vehicle.

7. The method of either claim 5 or claim 6, further comprising, for each of the plurality of access points to the network in range of the predicted travel path:
storing the packets at the access point until the source device is in range of the access point; and
sending the packets to the source device when the vehicle is in range of the access point.

8. A computer program product or logic encoded in one or more non-transitory media that includes code for execution and when executed by one or more processors is operable to perform the method of any of the preceding claims.

9. Apparatus comprising means for carrying out respective steps of the method of any of claims 1 to 7.

## Patentansprüche

1. Verfahren, das Folgendes beinhaltet:
Empfangen (402) einer Anforderung von Daten von einem Quellgerät über ein Netzwerk, wobei das Quellgerät mehrere unterschiedliche physische oder virtuelle drahtlose Schnittstellen zum Verbinden mit mehreren Zugangspunkten gleichzeitig über unterschiedliche drahtlose Netzwerke umfasst;
Empfangen (404) von mit dem Quellgerät assoziierten Ortsdaten;
Vorhersagen (406) eines Wegs für das Quellgerät auf der Basis der Ortsdaten, wobei die Ortsdaten wenigstens eines aus GPS-Koordinaten über Zeit, Geschwindigkeit, Bewegungsrichtung und Ziel des Quellgeräts umfassen;
Orten (408) von mehreren Zugangspunkten zu dem Netzwerk innerhalb des Bereichs des vorhergesagten Wegs; und
Senden (414) von mit den angeforderten Daten assoziierten Paketen zu den mehreren Zugangspunkten,
wobei die Pakete zu mehreren aus der Mehrzahl von Zugangspunkten gesendet werden, die mit den mehreren verschiedenen physischen oder virtuellen drahtlosen Schnittstellen des Quellgeräts über unterschiedliche drahtlose Netzwerke kommunizieren können;
wobei die angeforderten Daten in den Paketen codiert werden und die Pakete einen Teilsatz von redundanten Paketen beinhalten.

2. Verfahren nach Anspruch 1, wobei
die Pakete einen ersten Abschnitt und einen zweiten Abschnitt der angeforderten Daten umfassen,
der erste Abschnitt von Paketen zum ersten Zugangspunkt aus der Mehrzahl von Zugangspunkten gesendet wird; und
der zweite Abschnitt zu einem zweiten Zugangspunkt aus der Mehrzahl von Zugangspunkten gesendet wird.

3. Verfahren nach einem vorherigen Anspruch, wobei die angeforderten Daten in den Paketen mit Vorwärtsfehlerkorrektur codiert werden.

4. Verfahren nach Anspruch 1 oder 2, wobei die angeforderten Daten in den Paketen mit Netzwerkcodierung codiert werden.

5. Verfahren nach einem vorherigen Anspruch, wobei das Quellgerät eine Bordeinheit eines Fahrzeugs ist.

6. Verfahren nach einem der Ansprüche 1 bis 4, wobei das Quellgerät ein mit einer Bordeinheit eines Fahrzeugs gekoppeltes mobiles Gerät ist.

7. Verfahren nach Anspruch 5 oder 6, das ferner für jeden der mehreren Zugangspunkte zu dem Netzwerk im Bereich des vorhergesagten Verfahrwegs Folgendes beinhaltet:
Speichern der Pakete am Zugangspunkt, bis das Quellgerät im Bereich des Zugangspunkts ist; und
Senden der Pakete zum Quellgerät, wenn das Fahrzeug innerhalb des Bereichs des Zugangspunkts ist.

8. Computerprogrammprodukt oder Logik, codiert in einem oder mehreren nichtflüchtigen Medien, die Code zur Ausführung beinhalten, der bei Ausführung durch einen oder mehrere Prozessoren das Verfahren nach einem der vorherigen Ansprüche durchführt.

9. Vorrichtung, die Mittel zum Durchführen von jeweiligen Schritten des Verfahrens nach einem der Ansprüche 1 bis 7 umfasst.

## Revendications

1. Procédé, comprenant :
la réception (402) d'une demande de données depuis un dispositif source sur un réseau, le dispositif source comprenant de multiples interfaces sans fil physiques ou virtuelles différentes pour se connecter à de multiples points d'accès simultanément sur différents réseaux sans fil ;
la réception (404) de données de position associées au dispositif source ;
la prédiction (406) d'une trajectoire de déplacement du dispositif source en fonction des données de position, dans lequel les données de position comprennent au moins l'un de coordonnées GPS dans le temps, vitesse, sens de déplacement, et destination du dispositif source ;
la localisation (408) d'une pluralité de points d'accès au réseau à portée de la trajectoire de déplacement prédite ; et
l'envoi (414) de paquets associés aux données demandées à la pluralité de points d'accès, dans lequel
les paquets sont envoyés à de multiples points d'accès de la pluralité de points d'accès qui peuvent communiquer avec les multiples interfaces sans fil physiques ou virtuelles différentes du dispositif source sur différents réseaux sans fil ;
dans lequel les données demandées sont codées dans les paquets et les paquets comportent un sous-ensemble de paquets redondants.

2. Procédé selon la revendication 1, dans lequel
les paquets comprennent une première section et une seconde section des données demandées ;
la première section de paquets est envoyée à un premier point d'accès de la pluralité de points d'accès ; et
la seconde section est envoyée à un second point d'accès de la pluralité de points d'accès.

3. Procédé selon l'une quelconque des revendications précédentes, dans lequel les données demandées sont codées dans les paquets avec correction d'erreurs sans voie de retour.

4. Procédé selon la revendication 1 ou la revendication 2, dans lequel les données demandées sont codées dans les paquets avec un codage de réseau.

5. Procédé selon l'une quelconque des revendications précédentes, dans lequel le dispositif source est une unité embarquée d'un véhicule.

6. Procédé selon l'une quelconque des revendications 1 à 4, dans lequel le dispositif source est un dispositif mobile couplé à une unité embarquée d'un véhicule.

7. Procédé selon la revendication 5 ou la revendication 6, comprenant en outre, pour chacun de la pluralité de points d'accès au réseau à portée de la trajectoire de déplacement prédite :
le stockage des paquets au niveau du point d'accès jusqu'à ce que le dispositif source se trouve à portée du point d'accès ; et
l'envoi des paquets au dispositif source quand le véhicule est à portée du point d'accès.

8. Produit de programme informatique ou logique codé dans un ou plusieurs supports non transitoires qui comportent un code d'exécution exploitable, à son exécution par un ou plusieurs processeurs, pour exécuter le procédé selon l'une quelconque des revendications précédentes.

9. Appareil comprenant un moyen pour exécuter des étapes respectives du procédé selon l'une quelconque des revendications 1 à 7.
